Europäisches Patentamt

European Patent Office

Office européen des brevets

(11) Veröffentlichungsnummer: **0 349 995**
**A2**

## (12) EUROPÄISCHE PATENTANMELDUNG

(21) Anmeldenummer: **89112225.1**

(51) Int. Cl.⁴: **H02J 7/00**

(22) Anmeldetag: **04.07.89**

(30) Priorität: 04.07.88 DE 3822570

(43) Veröffentlichungstag der Anmeldung:
**10.01.90 Patentblatt 90/02**

(84) Benannte Vertragsstaaten:
**DE FR GB IT SE**

(71) Anmelder: **ELEKTRON-BREMEN Fabrik für
Elektrotechnik GmbH
Am Hohentorshafen 17-19
D-2800 Bremen(DE)**

(72) Erfinder: **Goldgrabe, Richard, Dipl.-Ing.
Graf-Moltke-Strasse 67
D-2800 Bremen(DE)**
Erfinder: **Seyferth, Wolfhard, Dipl.-Ing.
Westersteder Weg 1
D-2874 Lemwerder(DE)**

(74) Vertreter: **Möller, Friedrich, Dipl.-Ing. et al
Meissner, Bolte & Partner Patentanwälte
Hollerallee 73
D-2800 Bremen 1(DE)**

(54) Verfahren zur Anpassung eines Batterieladegerätes an unterschiedliche Ladeverfahren und Batterietypen und Batterieladegerät.

(57) Die bisher erhältlichen Batterieladegeräte sind nur eingeschränkt für einen jeweiligen Batterietyp verwendbar. Das neue Verfahren bzw. das neue Batterieladegerät soll eine teure Neuanschaffung des letzteren bei einem Batteriewechsel überflüssig machen.

Zu diesem Zweck ist ein Programmodul vorgesehen, welches alle Informationen über einen Batterietyp bzw. ein Ladeverfahren enthält und welches zur Anpassung einfach ausgetauscht wird.

Fig. 1

## Verfahren zur Anpassung eines Batterieladegerätes an unterschiedliche Ladeverfahren und Batterietypen und Batterieladegerät

Die Erfindung betrifft ein Verfahren zur Anpassung eines Batterieladegerätes an unterschiedliche Ladeverfahren und Batterietypen.

Batterieladegeräte für wiederaufladbare Batterien arbeiten mit unterschiedlichsten Ladeverfahren. So werden z.B. Verfahren mit Konstantstrom oder Konstantspannung bzw. Kombinationen aus beidem angewandt. Während des Ladevorganges wird im wesentlichen zwischen zwei Phasen unterschieden, nämlich einer Hauptladephase und einer Nachladephase. Der vermehrte Einsatz wartungsarmer, trokkener Batterietypen, z.B. in batteriegetriebenen Fahrzeugen, erfordert die An wendung kurzer und ökonomischer Ladeverfahren, die genau auf den entsprechenden Batterietyp abgestimmt sind. Die feinen Unterschiede zwischen den einzelnen Batterietypen bestehen im wesentlichen in den einzuhaltenden Strom- und Spannungswerten während der Nachladephase. Eine genaue Anpassung an den jeweiligen Batterietyp ist insbesondere dann von Vorteil, wenn es die jeweilige Ladezeit unter Berücksichtigung der Lebensdauer einer Batterie zu optimieren gilt. Zu diesem Zweck war bisher bei Wechsel der Lademethode oder der Batterieart ein neues Batterieladegerät oder eine sehr aufwendige neuerliche Veränderung des alten Batterieladegerätes erforderlich.

Aufgabe der vorliegenden Erfindung ist es daher, ein Verfahren bereitzustellen, mit dem Batterieladegeräte an unterschiedliche Ladeverfahren und Batterietypen angepaßt werden können. Weitere Aufgabe der Erfindung ist es, ein Batterieladegerät zur Durchführung des genannten Verfahrens bereitzustellen.

Erfindungsgemäß wird die Aufgabe durch die kennzeichnenden Maßnahmen des Anspruchs 1 gelöst. Durch den Austausch eines dem Batterieladegerät zugeordneten und batterie-, ladeverfahrens-, ladezeit- und/oder einsatzabhängige Parameter sowie gegebenenfalls ein oder mehrere Ladeverfahren in Programmform enthaltenden Programmoduls kann das Batterieladegerät leicht an unterschiedliche Ladeverfahren und Batterietypen angepaßt werden.

Dementsprechend weist das erfindungsgemäße Batterieladegerät ein austauschbares Programmodul auf, das die zuvor genannten Daten (Parameter, Programme) enthält.

Vorteilhafterweise weist das austauschbare Programmodul zumindest einen oder mehrere Speicher auf, in denen Ladeverfahren, Ladekennlinien und/oder vorgegebene Sollwerte abspeicherbar sind. Diese Speicher sind das eigentliche Herzstück des Programmoduls. Sie beinhalten alle wesentlichen ladeverfahrenstypischen Parameter, Zeitverläufe usw.

Durch einen einfachen Austausch des Programmoduls kann das Batterieladegerät an jeden Batterietyp und an jedes Ladeverfahren angepaßt werden. Ein neues Batterieladegerät oder eine aufwendige Umrüstung des alten Batterieladegerätes sind nicht mehr erforderlich.

Weitere Merkmale der Erfindung betreffen die Ausgestaltung des Programmoduls sowie die Anordnung von weiteren zur Durchführung der gewünschten Ladeverfahren vorteilhaften Bauteilen und sind den Unteransprüche zu entnehmen.

Besonders vorteilhaft ist es, einen Prozessor mit weiteren Regel- und Hilfsschaltungen zur Steuerung des Ladevorgangs im Batterieladegerät, jedoch außerhalb des Programmoduls anzuordnen. Das zur Anpassung an einen neuen Batterietyp oder ein neues Ladeverfahren auszuwechselnde Bauteil (Programmodul) fällt dadurch besonders klein aus.

In einer weiteren vorteilhaften Ausführungsform ist das Programmodul als programmierbarer Speicherbaustein, insbesondere als EPROM ausgebildet. Das Programmodul kann auf diese Weise besonders preiswert hergestellt werden. Außerdem können gegebenenfalls bereits programmierte Programmmodule zur Anpassung an besondere Kundenwünsche umprogrammiert werden.

Ausführungsbeispiele der Erfindung werden nachstehend anhand von Zeichnungen näher erläutert. Es zeigen:

Fig. 1 ein Programmodul zum Anschluß an ein Batterieladegerät in der schematischen Draufsicht,

Fig. 2 ein Batterieladegerät mit einem angeschlossenen bzw. aufgesteckten Programmodul und einer zu ladenden Batterie,

Fig. 3 ein Batterieladegerät wie in Fig. 2, wobei jedoch das Programmodul mit der Batterie verbunden und parallel zu dieser an das Batterieladegerät angeschlossen ist,

Fig. 4 Strom und Spannung als Funktion der Zeit für ein bestimmtes Ladeverfahren,

Fig. 5 Strom und Spannung als Funktion der Zeit wie in Fig. 4, jedoch für ein anderes Ladeverfahren,

Fig. 6 ein Batterieladegerät mit den zur Steuerung erforderlichen Komponenten in schematischer Darstellung, und

Fig. 7 ein Batterieladegerät in einer gegenüber der Fig. 6 abgewandelten Ausführungsform, ebenfalls in schematischer Darstellung.

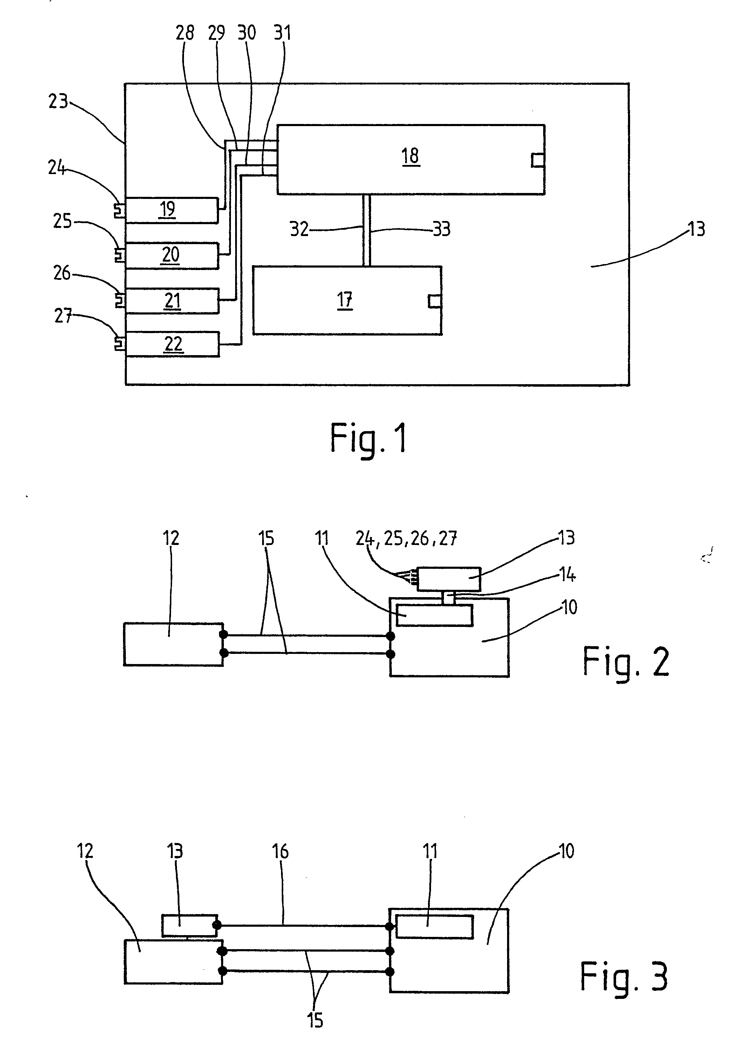

Ein Batterieladegerät 10 ist mit einer Steuerelektronik 11 versehen, die den Ladevorgang einer angeschlossenen Batterie 12 überwacht. Ein Programmodul 13 liefert ladeverfahrens- und batterieabhängige Informationen an die Steuerelektronik 11 und ist auf diese aufgesteckt (vgl. Fig. 2). Bei einem Wechsel des Ladeverfahrens oder des Batterietyps wird das Programmodul 13 entsprechend ausgetauscht durch Lösen einer Steckverbindung 14 im Bereich der Steuerelektronik 11 und durch Einsetzen eines anderen Programmoduls. Die Steuerelektronik 11 enthält in den Figuren nicht dargestellte Bauteile wie D/A-Wandler, A/D-Wandler, Regler, Stellglieder und gegebenenfalls Anzeigeinstrumente.

Die Fig. 3 zeigt gegenüber der Fig. 2 eine andere Ausführungsform, bei der das Programmodul 13 mit der Batterie 12, etwa durch eine Steckverbindung, verbunden ist. Die Verbindung zum Batterieladegerät 10 erfolgt über eine zur Starkstromverbindung 15 parallele Signalleitung 16. Das Programmodul 13 wird aufgrund der Verbindung zur Batterie 12 stets zusammen mit dieser ausgetauscht und liefert der Steuerelektronik 11 stets die batteriespezifischen Informationen.

Der Aufbau des Programmoduls 13 ist in Fig. 1 gezeigt. Die wesentlichen Bauteile des Programmoduls 13 sind ein Programmspeicher 17, ein Prozessor 18 sowie vier Potentiometer 19. .22. Der Programmspeicher 17 enthält alle wichtigen ladeverfahrensabhängigen und batterietypischen Daten. Er ist als löschbarer, programmierbarer Speicher (EPROM) ausgebildet. Das EPROM kann den Anforderungen entsprechend programmiert und bei Bedarf wieder gelöscht und neu programmiert werden.

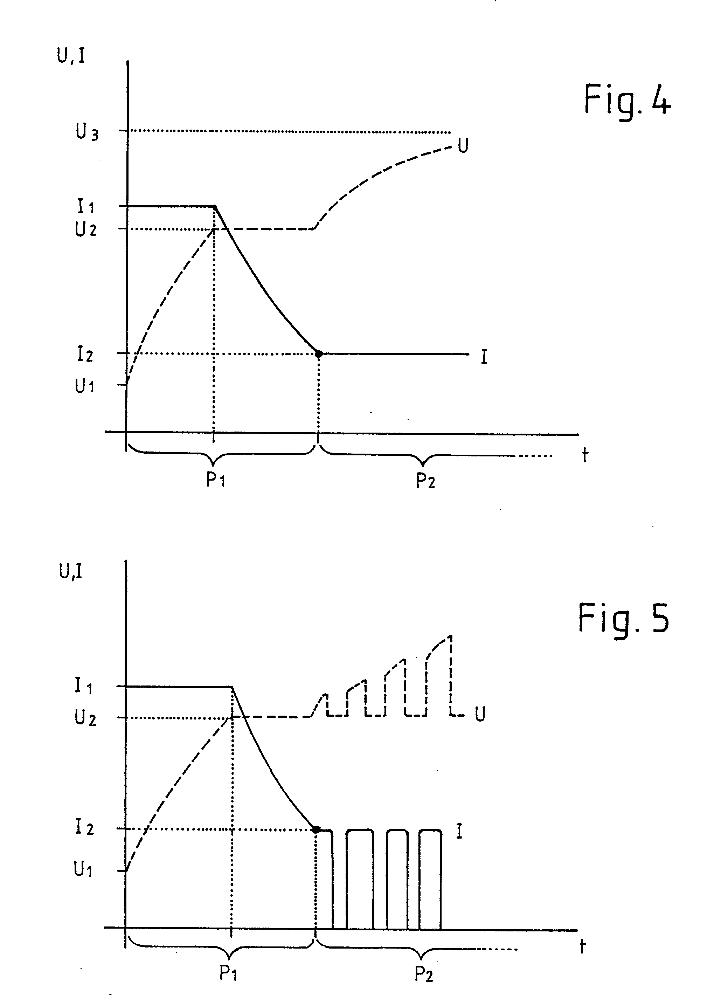

Den Figuren 4 und 5 sind Strom und Spannung als Funktion der Zeit für verschiedene Ladeverfahren entnehmbar. Die gestrichelte Linie stellt den Spannungsverlauf und die durchgehende Linie den Stromverlauf über der Zeit dar. Charakteristische Spannungswerte während des Ladevorgangs sind die Ladeanfangsspannung $U_1$, die Gasungsspannung $U_2$ sowie die Ladeschlußspannung $U_3$. Entsprechend wird beim Strom zwischen dem Ladeanfangsstrom $I_1$ und dem Ladeschlußstrom $I_2$ unterschieden. Der Ladevorgang selbst wird in zwei Phasen unterteilt, nämlich die Hauptladephase $P_1$ und die Nachladephase $P_2$. Die in den Figuren 4 und 5 dargestellten Ladeverläufe unterscheiden sich im wesentlichen in der Nachladephase $P_2$. Diese Unterschiede in der Nachladephase $P_2$ werden in der Regel bedingt durch Verwendung unterschiedlicher Batterietypen, z.B. eine Gelbatterie im Gegensatz zu einer Naßbatterie. Der Programmspeicher 17 enthält demgemäß alle Informationen, die zur Unterscheidung der unterschiedlichen Ladeverläufe erforderlich sind, wie den Verlauf des Stromes und der Spannung über der Zeit.

Die genannten Spannungs- und Stromwerte sind im wesentlichen batterieabhängig und können mittels der Potentiometer 19..22 (gemäß Fig. 1) eingestellt werden, so daß bei Anwendung desselben Ladeverfahrens für ähnlich Batterien lediglich die Potentiometer 19. .22 verstellt werden müssen und nicht das Programmodul 13 ausgetauscht werden muß. Die Potentiometer 19. .22 sind zu diesem Zweck an einer Stirnseite 23 des Programmoduls 13 angeordnet und weisen jeweils Verstellschrauben 24. .27 auf. Letztere sind so angeordnet, daß sie auch bei auf dem Batterieladegerät 10 aufgestecktem Programmodul 13 von außen zugänglich und verstellbar sind. Die Anzahl der einstellbaren Potentiometer ist von der Zahl der einzustellenden Strom- und Spannungswerte abhängig. Zum Beispiel könnten noch eine maximale Zellenspannung vor Ladung, eine minimale Zellenspannung für den Ladebeginn sowie eine Sulfatierungsspannung als veränderbare Parameter vorzusehen sein. Die Anzahl der Potentiometer 19. .22 wäre dann daran anzupassen.

Weiterer Bestandteil des Programmoduls 13 gemäß Fig. 1 ist der Prozessor 18, der den eigentlichen Ladevorgang steuert und überwacht nach den im Programmspeicher 17 gespeicherten Ladeverfahren und den über die Potentiometer 19. .22 eingestellten Werten. Zur Übermittlung der Informationen weisen der Programmspeicher 17 und die Potentiometer 19. .22 Zuleitungen 28. .33 zum Prozessor 18 auf.

Das Programmodul 13 enthält zusätzlich zu den in der Fig. 1 gezeigten Bauteilen weitere Bauteile, Widerstände, Kondensatoren und ICs, die zum Betrieb erforderlich sind, die aber dem Fachmann geläufig sind und im Rahmen der Erfindung nicht extra beschrieben werden müssen.

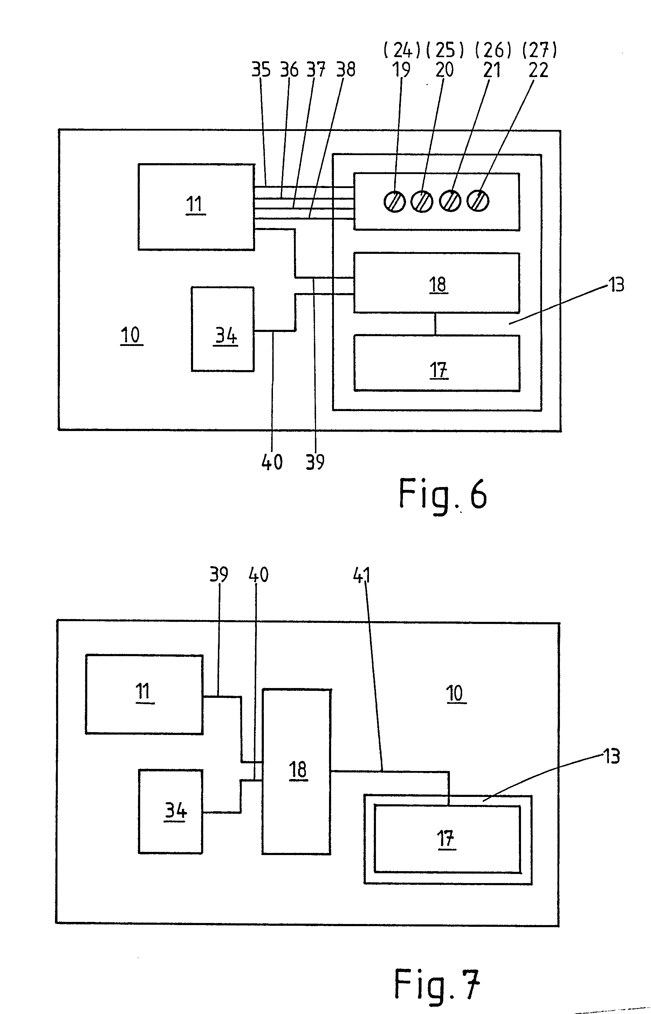

Die Fig. 6 zeigt eine schematische Darstellung des Ladegerätes 10 in einer gegenüber den Figuren 1 und 2 geringfügig abgewandelten Form. Fest eingebaut im Ladegerät sind die Steuerelektronik 11 und eine Referenzspannungsquelle 34. Letztere versorgt den Prozessor 18 mit einem stets gleichbleibenden, hochgenauen und digitalisierten Spannungswert. Die im Programmspeicher 17 abgelegten elektrischen Größen können dadurch als auf die Referenzspannung bezogen dargestellt sein. In den Ausführungsbeispielen gemäß den Figuren 1 bis 3 kann eine entsprechende Referenzspannungsquelle in der Steuerelektronik 11 enthalten sein. In der Fig. 6 sind der Programmspeicher 17 und der Prozessor 18 Teil des Programmoduls 13. Ebenso gehören zum Programmodul 13 die Potentiometer 19. .22 mit Verstellschrauben 24. .27. Das Programmodul 13 ist über eine Steckverbindung von dem Batterieladegerät 10 lösbar. Die Steckverbindung selbst ist nicht näher bezeichnet in der Fig. 6, dafür jedoch die im Rahmen der Steckverbindung zu lösenden Zuleitungen. Es sind dies Leitungen 35. .38 zwischen den Potentiometern 19. .22 und der Steuerelektronik 11 sowie Leitungen 39 und 40 zwischen dem Prozessor 18 und der Steuerelektronik 11 bzw. dem Prozessor 18 und der Referenzspannungsquelle 34. Die Leitungen 39, 40 können jeweils mehrere einzelne, voneinander getrennte Leiter enthalten.

Eine weitere Ausführungsform zeigt die Fig. 7. Dort ist der Prozessor 18 nicht im Bereich des Programmoduls 13, sondern vielmehr fest im Batterieladegerät 10 angeordnet. Ebenso wie in der Fig. 6 sind Leitungen 39, 40 zwischen dem Prozessor 18 und der Steuerelektronik 11 bzw. dem Prozessor 18 und der Referenzspannungsquelle 34 vorgesehen. Das Programmodul 13 besteht bei dieser Ausführungsform nur noch aus dem Programmspeicher 17. Letzterer ist ein EPROM mit einem Fassungsvermögen von 8 kB. Im Programmspeicher 17 sind sowohl Programme zur Durchführung eines oder mehrerer Ladeverfahren als auch Batteriesollwerte abgespeichert. Durch das Ablegen der Sollwerte im Programmspeicher 17 können nahezu beliebig viele davon (nur abhängig vom Fassungsvermögen des Speichers) abgespeichert und während des Ladevorgangs berücksichtigt werden. Die in der Fig. 6 vorgesehenen Potentiometer 19. .22 zur Sollwerteinstellung sind in der Fig. 7 entsprechend nicht vorhanden. Auch in der Fig. 7 ist das Programmodul 13 bzw. der Programmspeicher 17 über eine Steckverbindung vom Batterieladegerät 10 lösbar. Die - nicht explizit gezeigte - Steckverbindung beinhaltet eine Leitung 41 zwischen dem Programm speicher 17 und dem Prozessor 18 mit gegebenenfalls mehreren voneinander getrennten Leitern. Diese Ausführungsform hat den Vorteil, daß das auszutauschende Bauteil besonders klein und damit preisgünstig ausfällt. Außerdem ist die Anzahl der im Rahmen der Steckverbindung zu berücksichtigenden Leiter klein.

Ausgehend von der Ausführungsform gemäß Fig. 7 ist in einer anderen, hier nicht gezeigten Ausführungsform der Prozessor 18 zusammen mit dem Programmspeicher 17 Bestandteil des Programmoduls 13. Im Rahmen der Steckverbindung zwischen Programmodul 13 und Batterieladegerät 10 sind dann die Leitungen 39, 40 auftrennbar.

Allen Ausführungsformen gemeinsam ist, daß das Batterieladegerät 10 durch Austausch des steckbaren Programmoduls 13 an jedes Ladeverfahren und jeden Batterietyp angepaßt werden kann.

## Ansprüche

1. Verfahren zur Anpassung eines Batterieladegerätes an unterschiedliche Ladeverfahren und Batterietypen, **dadurch gekennzeichnet,** daß ein dem Batterieladegerät (10) zugeordnetes Programmodul (13) dem Batterietyp und/oder Ladeverfahren entsprechend ausgetauscht wird, wobei das Programmodul (13) zumindest batterie-, ladeverfahrens-, ladezeit- und/oder einsatzabhängige Parameter sowie ggf. ein oder mehrere Ladeverfahren in Programmform enthält.

2. Verfahren nach Anspruch 1, dadurch gekennzeichnet, daß das nach dem Austausch mit dem Batterieladegerät (10) verbundene Programmodul (13) über Sollwertgeber - vorzugsweise manuell einstellbare Potentiometer (19. .22) - an batterieabhängige Daten angepaßt wird.

3. Verfahren nach Anspruch 1, dadurch gekennzeichnet, daß eine Anpassung an batterieabhängige Daten im Rahmen eines auf einem im Batterieladegerät (10) oder im Programmodul (13) angeordneten Prozessor (18) ablaufenden Programms anhand der im Programmodul (13) abgespeicherten Daten vorgenommen wird.

4. Verfahren nach einem der Ansprüche 1 bis 3, dadurch gekennzeichnet, daß der Austausch des Programmoduls (13) durch Lösen und Verbinden einer Steckverbindung (14), Steckerleiste oder dergleichen erfolgt.

5. Batterieladegerät, gekennzeichnet durch ein austauschbares Programmodul (13), zur Anpassung des Batterieladegerätes (10) an unterschiedliche Batterietypen und/oder Ladeverfahren.

6. Batterieladegerät nach Anspruch 5, dadurch gekennzeichnet, daß das austauschbare Programmodul (13) zumindest einen oder mehrere Speicher (17) aufweist, in denen Ladeverfahren, Ladekennlinien und/oder vorgegebene Sollwerte abspeicherbar sind.

7. Batterieladegerät nach Anspruch 5 oder 6, dadurch gekennzeichnet, daß das austauschbare Programmodul (13) Sollwertgeber, insbesondere ggf. manuell einstellbare Potentiometer (19. .22) zur Anpassung an Batterie-Leistungsdaten enthält.

8. Batterieladegerät nach einem der Ansprüche 5 bis 7, dadurch gekennzeichnet, daß das austauschbare Programmodul (13) einen Prozessor (18) zur Steuerung des Ladevorgangs in Abhängigkeit vom gespeicherten Programm enthält.

9. Batterieladegerät nach Anspruch 6 oder 7, gekennzeichnet durch einen außerhalb des Programmoduls (13) im Batterieladegerät (10) angeordneten Prozessor (18) zur Steuerung des Ladevorgangs anhand der im Speicher (17) abgelegten Daten und vorzugsweise mittels weiterer Regel-und Hilfsschaltungen.

10. Batterieladegerät nach einem der Ansprüche 5 bis 9, gekennzeichnet durch eine vorzugsweise außerhalb des Programmoduls (13) angeordnete Referenzspannungsquelle (34) zur Normierung der vom Prozessor (18) zu verarbeitenden Daten.

11. Batterieladegerät nach einem der Ansprüche 5 bis 10, dadurch gekennzeichnet, daß das Programmodul (13) als programmierbarer Speicherbaustein, insbesondere als EPROM ausgebildet ist.

12. Batterieladegerät nach einem der Ansprüche 5 bis 11, gekennzeichnet durch eine Steckverbindung (14) zum Programmodul (13).

Fig. 1

Fig. 2

Fig. 3

# Fig. 4

# Fig. 5

Fig. 6

Fig. 7